# EUROPEAN PATENT SPECIFICATION

(11) **EP 2 341 406 B1**
(45) Date of publication and mention of the grant of the patent: **31.10.2012**
(21) Application number: 09180665.3
(22) Date of filing: 23.12.2009
(51) Int. Cl.: G05B 19/042, G05B 19/05

(54) **Method for safely parameterizing an electrical device**
Verfahren zur sicheren Parametrisierung einer elektrischen Vorrichtung
Procédé pour paramétrisation sécurisée d'un dispositif électrique

(43) Date of publication of application: 06.07.2011
(73) Proprietor: Siemens Aktiengesellschaft, 80333 München (DE)
(72) Inventor: Lomas, Adam, Havelock Ontario K0L 1Z0 (CA)
(74) Representative: Maier, Daniel Oliver

(56) References cited:
- EP-A2- 1 662 346
- DE-U1-202008 015 021
- GB-A- 2 283 116

## Description

The invention relates to a method for safely parameterizing an electrical device, a parameter input by a user on a control unit being transmitted to the electrical device and being stored there with write protection, the stored parameter being transmitted back to the control unit in a data format which is not processable by the control unit and being displayed there for confirmation by the user, and the confirmation being transmitted to the electrical device to verify the stored parameters.

In such a method, which is known from DE 20 2008 015021 U1, the parameter that has been inputted on the control unit is secured with a CRC check value which is checked in the electrical device before the parameter is stored there. The user confirms correctness of the stored parameters by inputting a user password.

Even though the known method relates to a speed monitoring device, parameterizable electrical devices concerned here generally include, for example, process automation field devices such as measuring transducers or valve positioners.

When parameterizing electrical devices or systems which perform a safety function and therefore require certification according to the basic safety standard IEC 61508, it must be ensured, that safety-relevant parameters actually correspond to those input by the user and that they can no longer be changed without a new user input. In order to verify the parameters by the user, each safety-relevant parameter is displayed for the user again in a diverse format and the user individually confirms each parameter. In this case, it must be ensured that the parameters transmitted for the purpose of confirmation correspond to the values actually stored in the device. As long as there is no verified set of parameters, safety-related operation of the device is not possible.

EP 1 662 346 A2 describes different methods for safely parameterizing an electrical device, here an automation field device. In this case, the parameters can be directly input on a display and control unit (on-site control) of the field device or on a separate control unit (for example laptop or HART handheld device), which is connected to the field device via a field bus or is directly connected to a service interface of the field device, and can be transmitted from there to the field device.

According to EP 1 662 346 A2, it is possible, during on-site input, to monitor the parameters which have been input in that each individual character is displayed on the display unit of the field device and, following input, all values are displayed once again and are confirmed by the user.

When inputting the parameters via the separate control unit, it is possible to write and revise the data in the control unit. The control program writes the data which have been input by the user to the field device via the service interface or the field bus, reads out the data stored in the field device again and compares them with the input values. In this respect and in order to increase safety when writing and reading, the data can be transmitted with different data types in order to exclude systematic or random errors in the transmission protocol.

Safety-relevant parameters must be stored in the field device with write protection so that they cannot be subsequently changed. In order to ensure that only a write-protected parameter, i.e. a parameter which can no longer be changed, is reported back to the control unit and is confirmed as being correct there or, in other words, in order to prevent a parameter being reported back to the control unit and being confirmed as being correct there before it has been stored with write protection, it is conceivable to generate a check value, for example a CRC check value, both for the parameter which has been input on the control unit and for the parameter which has been stored in the field device with write protection, using the same checking algorithm in each case and to compare both check values for a match when reporting the stored parameters to the control unit. However, the use of check values is not possible if, as mentioned above, the data are transmitted with different data types when writing to the field device and reading from the field device.

Finally, EP 1 662 346 A2 describes the possibility of additionally inputting the parameters, which have been input on the field device directly or via the separate control unit connected to the field device, on a monitoring device. The same checking program respectively runs in the field device and in the monitoring device and uses the parameters which have been input to respectively generate a check value, for example a CRC check value. The check value determined by the monitoring device must then be input on the field device and the input of the parameters is accepted only if the check value calculated in the field device matches the check value calculated by the monitoring device and input on the field device.

It is an object of the invention to further improve the safety or security during parameter entry.

According to the invention, this is achieved, in the method initially referred to, in that
- the parameter's name and a code generated by the device are transmitted back to the control unit together with the stored parameter and in said non-processable data format ,
- the returned parameter's, its name and the code are together with the parameter displayed for the user on the control unit,
- the confirmation comprises inputting of the code by the user and
- the returned code is checked in the electrical device against the code generated there to verify the stored parameters if the result is positive.

The method according to the invention is independent of the format in which the parameters are stored in the electrical device because the user confirms the data contents (parameter value in connection with the parameter's name) rather than the data format.

Transmitting back the stored parameter together with the parameter's name saves time for the user who is manually comparing the input and returned parameters and reduces the probability of user error in comparing the parameters.

As the parameter, its name and the code are returned in a non-processable data format, the control unit is prevented from or modifying the returned parameter or displaying offline data in place of the returned parameter. The parameters are normally transmitted from the control unit to the electrical device in unsecured form so that the parameters may be buffered at any location on the way to the electrical device. As a result of the use of the non-processable data format, a data error during transmission can be detected and it is ensured that no buffered parameters are erroneously transmitted back to the control unit or read back from the latter and accepted as correct parameters there by the user.

Preferably, a text format is used as the non-processable data format. The text format is human-readable, i.e. it can be read without further conversion, and is generally directly supported by the control unit.

By returning the write-protected parameters together with a code, preferably a CRC check value, which is generated by the electrical device and needs to be confirmed by the user it is ensured that the parameter which is stored in the electrical device is also actually displayed for the user. The user's confirmation is checked in the electrical device to determine whether it contains the code. In the event of a positive confirmation, the parameter is verified and next parameter is requested. In the event of a negative confirmation, the verification of the current parameter is canceled.

For enhanced security, the code may be generated with a current time stamp and that in the electrical device the time stamp included in the confirmation is checked whether it is within a given time-window.

Parameters displayed for the user for verification may be confirmed individually or together.

The method according to the invention is used irrespective of whether the parameters are input directly on a display and control unit (local user interface) of the field device or on a separate control unit, which is connected to the field device via a field bus or is directly connected to a service interface of the field device, and are transmitted from there to the field device.

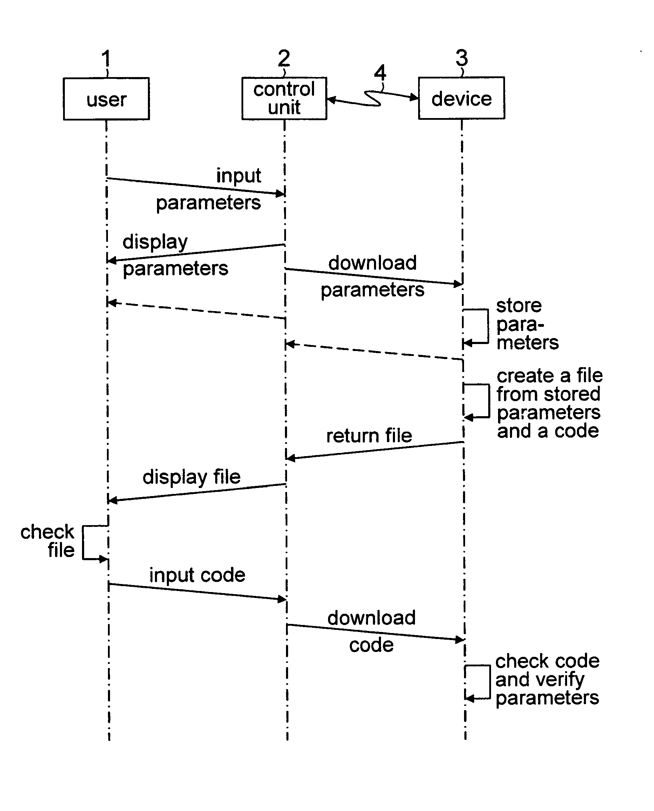

In the following detailed description of an exemplary embodiment of the invention, reference is made to the figure of the drawing which shows a sequence diagram of the method according to the invention.

Three blocks 1, 2 and 3 each represent a user, a control unit and an electrical device. The control unit 2 comprises input and display means (not shown) for inputting and displaying information. The electrical device 3 comprises storing means (not shown), e.g. an EEPROM, for storing information with write protection. There are further information exchanging means 4, e.g. a data interface, between the control unit 2 and the electrical device 3.

Safe parameterization of the electrical device 3 via the control unit 2 takes place as follows:
1. (input parameters): The user 1 enables parameterization by inputting a user password at the control unit 2. The user can 1 now input parameters. When inputted, the parameters are displayed and the user can correct the input. The parameter input is terminated by starting the verification operation.
2. (download parameters): The parameters are individually or jointly transferred to the electrical device 3.
3. (store parameters): The download parameters are stored in the device 3 with write protection. Alternatively to that what has been mentioned in step 1 above, the stored parameters may be read back to the control unit 2 (dotted arrows) and displayed there so that the user can correct the input. The parameter input is terminated by starting the verification operation.
4. (create a file from stored parameters and a code): The electrical device 3 creates a file from the stored parameters, the parameters' names and a code, e.g. a CRC value of the parameters, in a data format, e.g. a human-readable text format, which is not processable by the control unit 2.
5. (return and display file): The file is transmitted back to the control unit 2 which displays the file, i.e. the parameters, their names and the code, to the user 1.
6. (check file): The user 1 compares each returned parameter against the inputted parameters. In that the returned parameters are displayed together with their names, the check is facilitated and made safe.
7. (input and download code): The user 1 confirms correctness of the stored parameters by inputting the displayed code (if necessary together with the user password). The code is transmitted to the electrical device 3.
8. (check code and verify parameters): The electrical device 3 checks the returned code against the code created in step 4 and, if the result is positive, verifies the stored parameters. For enhanced security, the electrical device 3 may create the code with a current time stamp. The time stamp included in the returned code is then checked whether it is within a given time-window, i.e. confirmation by the user 1 must be made within said time-window.

## Claims

1. A method for safely parameterizing an electrical device (3), a parameter input by a user (1) on a control unit (2) being transmitted to the electrical device (3) and being stored there with write protection, the stored parameter being transmitted back to the control unit (2) in a data format which is not processable by the control unit (2) and being displayed there for confirmation by the user (1), and the confirmation being transmitted to the electrical device (3) to verify the stored parameters, **characterized in that**
- the parameter's name and a code generated by the device (3) are transmitted back to the control unit (2) together with the stored parameter and in said non-processable data format,
- the returned parameter's name and the code are displayed together with the parameter for the user on the control unit (2),
- the confirmation comprises inputting of the code by the user (1) and
- the returned code is checked in the electrical device (3) against the code generated there to verify the stored parameters if the result is positive.

2. The method as claimed in claim 1, **characterized in that** a text format is used as the non-processable data format.

3. The method as claimed in claim 1 or 2, **characterized in that** the code is a CRC check value.

4. The method as claimed in one of the preceding claims, **characterized in that** the code is generated with a current time stamp and that in the electrical device (3) the time stamp included in the confirmation is checked whether it is within a given time-window.

## Patentansprüche

1. Verfahren zur sicheren Parametrisierung einer elektrischen Vorrichtung (3), wobei ein durch einen Benutzer (1) auf einer Steuereinheit (2) eingegebener Parameter zu der elektrischen Vorrichtung (3) übertragen und dort mit Schreibschutz gespeichert wird, wobei der gespeicherte Parameter in einem Datenformat, das durch die Steuereinheit (2) nicht verarbeitbar ist, zu der Steuereinheit (2) zurückübertragen und dort zur Bestätigung durch den Benutzer (1) angezeigt wird und die Bestätigung zu der elektrischen Vorrichtung (3) übertragen wird, um die gespeicherten Parameter zu verifizieren, **dadurch gekennzeichnet, dass**
- der Name des Parameters und ein durch die Einrichtung (3) erzeugter Code zusammen mit dem gespeicherten Parameter und in dem nicht verarbeitbaren Datenformat zu der Steuereinheit (2) zurückübertragen werden,
- der zurückgegebene Name des Parameters und der Code zusammen mit dem Parameter für den Benutzer auf der Steuereinheit (2) angezeigt werden;
- die Bestätigung das Eingeben des Codes durch den Benutzer (1) umfasst und
- der zurückgegebene Code in der elektrischen Vorrichtung (3) gegenüber dem dort erzeugten Code geprüft wird, um die gespeicherten Parameter zu verifizieren, wenn das Ergebnis positiv ist.

2. Verfahren nach Anspruch 1, **dadurch gekennzeichnet, dass** ein Textformat als das nicht verarbeitbare Datenformat verwendet wird.

3. Verfahren nach Anspruch 1 oder 2, **dadurch gekennzeichnet, dass** der Code ein CRC-Prüfwert ist.

4. Verfahren nach einem der vorhergehenden Ansprüche, **dadurch gekennzeichnet, dass** der Code mit einem aktuellen Zeitstempel erzeugt wird und dass in der elektrischen Vorrichtung (3) der in der Bestätigung enthaltene Zeitstempel darauf geprüft wird, ob er innerhalb eines gegebenen Zeitfensters liegt.

## Revendications

1. Procédé de paramétrisation sécurisé d'un dispositif ( 3 ) électrique, une entrée de paramètre étant envoyée par un utilisateur ( 1 ) sur une unité ( 2 ) de commande au dispositif ( 3 ) électrique et y étant mémorisée avec protection en écriture, le paramètre mémorisé étant retourné à l'unité ( 2 ) de commande dans un format de donnée qui ne peut pas être traité par l'unité ( 2 ) de commande et y étant affiché pour confirmation par l'utilisateur ( 1 ) et la confirmation étant envoyée au dispositif ( 3 ) électrique pour vérifier les paramètres mémorisés, **caractérisé en ce que**
- le nom du paramètre et un code produit par le dispositif ( 3 ) sont retournés à l'unité ( 2 ) de commande en même temps que le paramètre mémorisé et dans le format de donnée qui ne peut pas être traité,
- le nom du paramètre et le code retournés sont affichés ensemble avec le paramètre pour l'utilisateur sur l'unité ( 2 ) de commande,
- la confirmation comprend l'entrée du code par l'utilisateur ( 1 ) et
- le code retourné est vérifié dans le dispositif ( 3 ) électrique par rapport au code qui y est produit pour vérifier les paramètres mémorisés si le résultat est positif.

2. Procédé suivant la revendication 1, **caractérisé en ce que** l'on utilise un format de texte comme format de donnée qui ne peut pas être traité.

3. Procédé suivant la revendication 1 ou 2, **caractérisé en ce que** le code est une valeur de contrôle CRC.

4. Procédé suivant l'une des revendications précédentes, **caractérisé en ce qu'**on produit le code par un horodatage courant et **en ce que**, dans le dispositif ( 3 ) électrique l'horodatage inclus dans la confirmation est vérifié sur le point de savoir s'il est dans un créneau de temps donné.
